(19) Europäisches Patentamt / European Patent Office / Office européen des brevets

(11) **EP 3 001 078 A1**

(12) **EUROPEAN PATENT APPLICATION**
published in accordance with Art. 153(4) EPC

(43) Date of publication:
**30.03.2016 Bulletin 2016/13**

(51) Int Cl.:
*F16K 31/04* (2006.01)      *F16K 11/052* (2006.01)
*F25B 41/06* (2006.01)

(21) Application number: **14801239.6**

(22) Date of filing: **07.03.2014**

(86) International application number:
**PCT/JP2014/001296**

(87) International publication number:
**WO 2014/188639 (27.11.2014 Gazette 2014/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **21.05.2013 JP 2013106908**

(71) Applicant: **TGK CO., Ltd.**
**Tokyo 193-0942 (JP)**

(72) Inventors:
• **SAEKI, Shinji**
**Hachioji-shi**
**Tokyo 193-0942 (JP)**
• **HAYAKAWA, Satoshi**
**Hachioji-shi**
**Tokyo 193-0942 (JP)**

• **OGAWA, Hirofumi**
**Hachioji-shi**
**Tokyo 193-0942 (JP)**
• **WAKABAYASHI, Akinobu**
**Hachioji-shi**
**Tokyo 193-0942 (JP)**
• **YUASA, Tomohiro**
**Hachioji-shi**
**Tokyo 193-0942 (JP)**
• **MIURA, Youichi**
**Hachioji-shi**
**Tokyo 193-0942 (JP)**

(74) Representative: **Schröer, Gernot H.**
**Meissner, Bolte & Partner GbR**
**Bankgasse 3**
**90402 Nürnberg (DE)**

(54) **SWITCHING VALVE**

(57)     A switching valve according to an embodiment includes: a body having a refrigerant passage through which a plurality of ports communicate; a shaft extending in a radial direction of the refrigerant passage, the shaft being rotatably supported by the body; a valve element configured to rotate with the shaft to selectively make the ports communicate; a drive mechanism configured to drive the valve element in opening and closing directions of the refrigerant passage via the shaft; a stepping motor including a rotor for actuating the drive mechanism and a stator; and a can that is a cylindrical member fixed to the body and surrounding the rotor, the can defining a pressure acting space in which pressure of refrigerant acts and a non pressure acting space in which pressure of refrigerant does not act. The valve element is part of a butterfly valve and includes a plate rotatable with the shaft and capable of defining a high-pressure region and a low-pressure region in the refrigerant passage. The pressure acting space inside the can communicates with the high-pressure region or the low-pressure region through a communicating path.

FIG.2

EP 3 001 078 A1

**Description**

Technical Field

The present invention relates to a switching valve suitable for use in a refrigeration cycle.

Background Art

An automotive air conditioner includes a refrigeration cycle including a compressor, an external heat exchanger, an evaporator, an expander, and so forth, in which the function of the external heat exchanger is switched between heating operation and cooling operation. During heating operation, the external heat exchanger functions as an evaporator. In this operation, an internal heat exchanger radiates heat, which heats the air in a vehicle interior, in the process of circulation of a refrigerant through the refrigeration cycle. During cooling operation, the external heat exchanger functions as a condenser. In this operation, the refrigerant condensed by the external heat exchanger evaporates in the evaporator and the evaporative latent heat thereof cools the air in the vehicle interior.

When the evaporators are switched between active and inactive states depending on the operation mode in this manner, refrigerant circulation passages through which refrigerant passes are switched to those for supplying the refrigerant to the active one of the evaporators. Thus, switching valves for switching between passages are provided at converging points and diverging points of multiple refrigerant circulation passages. An example of such switching valves employs a rotary structure (refer to Patent Document 1, for example). A rotary switching valve includes a body having refrigerant passages formed therein, a cylindrical valve element disposed at a converging point or a diverging point of the refrigerant passages, and a stepping motor for rotating the valve element, for example. The passages are switched by rotation (turning) of the valve element about the axis thereof. A rotor of the stepping motor and a drive mechanism that drives the valve element are disposed in a pressure-resistant can fixed to the body so that refrigerant leakage prevention is ensured.

Related Art Documents

Patent Documents

Patent Document 1: Japanese Patent Application Laid-Open No. 2010-266062

Disclosure of Invention

Problems to be Solved by the Invention

Such a switching valve, however, typically tends to have a large valve element, complicated passages and a large pressure loss of refrigerant passing therethrough. Furthermore, since the valve element has a cylindrical shape, the valve element tends to have a large sliding surface that slides against the body and a high sliding friction while rotating. In particular, when the difference between an upstream pressure and a downstream pressure of the valve element is large owing to an operating state of the refrigeration cycle, the operating torque is also great, which has been a hindrance to reducing power consumption of actuators and overall cost of the switching valve.

One of purposes of the present invention is to achieve a stepping motor driven switching valve suitable for use in a refrigeration cycle at low cost.

Means for Solving the Problem

An embodiment of the present invention is a stepping motor driven switching valve. The switching valve includes: a body having a plurality of ports for introducing or delivering refrigerant, and a refrigerant passage through which the ports communicate; a shaft extending in a radial direction of the refrigerant passage, the shaft being rotatably supported by the body; a valve element fixed to the shaft, and configured to rotate with the shaft to selectively make the ports communicate with one another; a drive mechanism configured to drive the valve element in opening and closing directions of the refrigerant passage via the shaft; a stepping motor including a rotor for actuating the drive mechanism and a stator for rotating the rotor; a can that is a cylindrical member fixed to the body, covering a space in which the drive mechanism is disposed, and surrounding the rotor, the can defining a pressure acting space in which the rotor is disposed and pressure of refrigerant acts and a non pressure acting space in which the stator is disposed and pressure of refrigerant does not act. The valve element is part of a butterfly valve and includes a plate rotatable with the shaft and capable of defining a high-pressure region and a low-pressure region in the refrigerant passage. A communicating path connecting the high-pressure region or the low-pressure region and the pressure acting space to permit circulation of refrigerant therethrough is further provided.

Since the switching valve of the embodiment is a butterfly valve having a simple structure in which a plate is attached to a shaft, which do not make the shapes of passages complicated and reduce pressure loss of refrigerant passing therethrough can be reduced. Thus, when the switching valve is applied to a refrigeration cycle, high cooling capacity and high heating capacity thereof can be maintained. In addition, since the switching valve has the simple structure, the switching valve can be fabricated at low costs. Furthermore, the plate of the butterfly valve is substantially symmetric with respect to the shaft due to the structure, which can keep the driving torque thereof low. As a result, power consumption in driving the stepping motor can also be reduced. According to the embodiment, the switching valve can be achieved at low costs.

In addition, since the communicating path is formed between the pressure acting space inside of the can and the refrigerant passage so as to facilitate the flow of refrigerant to and from the inside of the can, the pressure inside the can can be prevented from being excessively high. Specifically, when such a switching valve is applied to the refrigeration cycle, refrigerant inevitably flows to the inside of the can via a sliding portion of the shaft. Such flow of refrigerant, however, is actively facilitated so that the pressure inside the can is kept within a permissible range, rather than restricting such flow of refrigerant with use of a sealing member or the like. With the structure in which no sealing member is provided at the sliding portion of the shaft, the sliding friction at the sliding portion can be made lower, which also contributes to reduction in the operating torque mentioned above.

Advantageous Effects

According to the present invention, a stepping motor driven switching valve suitable for use in a refrigeration cycle can be achieved at low cost.

Brief Description of Drawings

FIG. 1 is a diagram illustrating a schematic configuration of an automotive air conditioner to which a butterfly valve according to a first embodiment is applied;

FIG. 2 is a cross-sectional view schematically illustrating a structure of a switching valve;

FIGS. 3A and 3B are cross-sectional views along arrows A-A in FIG. 2;

FIGS. 4A to 4C are views of a butterfly valve and peripheral structures thereof;

FIG. 5 is a cross-sectional view schematically illustrating a structure of a switching valve according to a second embodiment;

FIGS. 6A and 6B are partial enlarged views illustrating a structure of a communicating path;

FIGS. 7A to 7D are views of a butterfly valve and peripheral structures thereof;

FIGS. 8A and 8B are perspective views schematically illustrating a valve closed state of the butterfly valve and corresponding to a cross section along arrows A-A in FIG. 5;

FIGS. 9A and 9B are partial enlarged views illustrating a structure of a communicating path according to a modification of the second embodiment;

FIG. 10 is a cross-sectional view schematically illustrating a structure of a switching valve according to a third embodiment;

FIG. 11 is a cross-sectional view schematically illustrating a structure of a switching valve according to a fourth embodiment;

FIGS. 12A and 12B are views along arrows I-I in FIG. 11;

FIG. 13 is a cross-sectional view schematically illustrating a structure of a switching valve according to a fifth embodiment;

FIG. 14 is a cross-sectional view along arrows J-J in FIG. 13;

FIG. 15 is a cross-sectional view schematically illustrating a structure of a switching valve according to a sixth embodiment;

FIG. 16 is a cross-sectional view along arrows K-K in FIG. 15;

FIG. 17 is a cross-sectional view schematically illustrating a structure of a switching valve according to a seventh embodiment;

FIGS. 18A and 18B are cross-sectional views along arrows A-A in FIG. 17;

FIG. 19 is a cross-sectional view schematically illustrating a structure of a switching valve according to an eighth embodiment;

FIGS. 20A and 20B are cross sectional views along arrows A-A in FIG. 19;

FIG. 21 is a cross-sectional view schematically illustrating a structure of a switching valve according to a ninth embodiment; and

FIGS. 22A and 22B are cross-sectional views along arrows A-A in FIG. 21.

Modes for Carrying Out the Invention

Embodiments of the present invention will now be described in detail with reference to the drawings. In the following description, for convenience of description, the positional relationship of structures may be expressed as "vertical" or up and down on the basis of the depicted states of the structures in the drawings.

[First Embodiment]

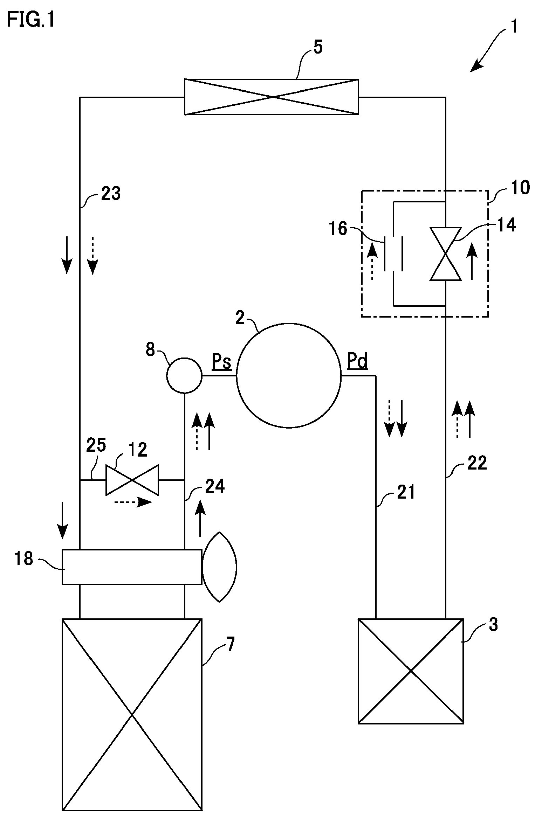

First, a first embodiment of the present invention will be described. FIG. 1 is a diagram illustrating a schematic structure of an automotive air conditioner to which a switching valve according to the first embodiment is applied. In the present embodiment, the automotive air conditioner is applied to an electric vehicle.

The automotive air conditioner 1 includes a refrigeration cycle (refrigerant circulation circuit) in which a compressor 2, an internal condenser 3, an external heat exchanger 5, an evaporator 7, and an accumulator 8 are connected by piping. The automotive air conditioner 1 is a heat pump air conditioner that uses the heat of an alternative for chlorofluorocarbon (such as HFC-134a or HFO-1234y) that is used as a refrigerant in a process where the refrigerant circulates in the refrigeration cycle while changing in state for air conditioning in the vehicle interior.

The compressor 2, the external heat exchanger 5, and the accumulator 8 are installed outside the vehicle interior (i.e., in an engine compartment). On the vehicle interior side, a duct in which air is heat-exchanged is provided, the evaporator 7 is disposed upstream of the air flow in the duct, and the internal condenser 3 is disposed downstream thereof.

The automotive air conditioner 1 is operated in such a manner that refrigerant circulation passages being used are switched between cooling operation and heating operation. In the refrigeration cycle, the internal condenser 3 and the external heat exchanger 5 are configured to be operable in series as condensers, and the evaporator 7 and the external heat exchanger 5 are both configured to be operable as evaporators. Specifically, a first refrigerant circulation passage through which the refrigerant circulates during cooling operation and a second refrigerant circulation passage through which the refrigerant circulates during heating operation are formed.

More specifically, a discharge chamber of the compressor 2 is connected to an inlet of the internal condenser 3 through a first passage 21, and an outlet of the internal condenser 3 is connected to an inlet of the external heat exchanger 5 through a second passage 22. An outlet of the external heat exchanger 5 is connected to an inlet of the evaporator 7 through a third passage 23, and an outlet of the evaporator 7 is connected to an inlet of the accumulator 8 through a fourth passage 24 (return passage). The third passage 23 and the fourth passage 24 are connected to each other by a bypass passage 25, which enables refrigerant delivered from the external heat exchanger 5 to be supplied to the accumulator 8 bypassing the evaporator 7.

As shown by solid arrows in FIG. 1, the first refrigerant circulation passage is a passage through which the refrigerant circulates as follows: the compressor 2 → the internal condenser 3 → the external heat exchanger 5 → the evaporator 7 → the accumulator 8 → the compressor 2. During cooling operation, the bypass passage 25 is closed off, and the refrigerant thus circulates through the first refrigerant circulation passage. As shown by dashed arrows in FIG. 1, the second refrigerant circulation passage is a passage through which the refrigerant circulates as follows: the compressor 2 → the internal condenser 3 → the external heat exchanger 5 → the accumulator 8 → the compressor 2. During heating operation, the bypass passage 25 is opened, and the refrigerant thus circulates through the second refrigerant circulation passage. Note that the flows of the refrigerant flowing through the external heat exchanger 5 in the first refrigerant circulation passage and in the second refrigerant circulation passage are in the same direction.

To achieve such switching between operation modes, a switching valve 10 is provided in the second passage 22 and a switching valve 12 is provided in the bypass passage 25. The switching valve 10 has an opening/closing valve section 14 configured to open and close the second passage 22 and an orifice 16 through which refrigerant passes whether the opening/closing valve section 14 is open or closed. The switching valve 12 has an opening/closing valve section configured to open and close the bypass passage 25. In addition, an expansion valve 18 is disposed downstream of a diverging point where the bypass passage 25 branches off from the third passage 23 (between the external heat exchanger 5 and the evaporator 7).

The compressor 2 is a motor-driven compressor including a motor and a compression mechanism accommodated in a housing, driven by current supplied by a not-shown battery, and having a refrigerant discharge capacity that varies depending on the motor speed.

The internal condenser 3 functions as an auxiliary condenser that makes refrigerant radiate heat separately from the external heat exchanger 5. Specifically, high-temperature and high-pressure refrigerant discharged from the compressor 2 radiates heat while passing through the internal condenser 3. Air introduced to the vehicle interior side is warmed while passing through the internal condenser 3. More specifically, air separated by a not-shown blend door (air mix door) from air that has been taken into the duct and cooled and dehumidified by the evaporator 7 is moderately heated while passing through the internal condenser 3. The air that has passed through the internal condenser 3 and the air that has bypassed the internal condenser 3 are mixed or blended and adjusted to a target temperature at the downstream of the internal condenser 3.

The external heat exchanger 5 functions as an external condenser for making refrigerant passing therethrough radiate heat during cooling operation and functions as an external evaporator for making refrigerant passing therethrough evaporate during heating operation. When the external heat exchanger 5 functions as the evaporator, refrigerant that is low in temperature and pressure as a result of passing through an expander (the orifice 16) evaporates while passing through the external heat exchanger 5.

The evaporator 7 functions as an internal evaporator for making refrigerant passing therethrough evaporate. Specifically, refrigerant that is low in temperature and pressure as a result of passing through an expander (the expansion valve 18) evaporates while passing through the evaporator 7. Air introduced to the vehicle interior side is cooled and dehumidified by the evaporative latent heat of the refrigerant. The cooled and dehumidified air will be heated while passing through the internal condenser 3.

The accumulator 8 is an apparatus for separating the refrigerant delivered from the evaporator 7 or the external heat exchanger 5 (external evaporator) into gas and liquid and storing the thus separated refrigerant, and includes a liquid phase part and a gas phase part. Thus, even if more than an estimated amount of liquid refrigerant is delivered from the evaporator, it is possible to store the liquid refrigerant in the liquid phase part and deliver refrigerant in the gas phase part to the compressor 2.

The expansion valve 18 is a so-called thermostatic expansion valve configured to sense the temperature and the pressure on the outlet side of the evaporator 7, adjust the valve opening degree, and supplies liquid refrigerant according to a thermal load to the evaporator 7. The expansion valve 18 includes a differential pressure regulating valve (means for closing upon sensing a low pressure difference) as described in Japanese Patent Application Laid-Open No. 2012-87966, for example, and closes a valve section thereof when the difference between an upstream pressure and a downstream pressure thereof (the difference between an upstream pressure and a downstream pressure of the valve section) becomes lower than a preset pressure difference. Since the structure of such a thermostatic expansion valve is described in this Publication, detailed description thereof will not be provided herein.

The switching valve 10 is a two-way valve including the opening/closing valve section 14 and an actuator configured to open and close the opening/closing valve section 14. As will be described later, however, a valve element of the opening/closing valve section 14 has the orifice 16 that is a small hole formed therethrough, which allows a certain amount of refrigerant to pass therethrough even while the valve is closed. In the present embodiment, a stepping motor is employed as the actuator of the switching valve 10.

The switching valve 12 is a two-way valve including the opening/closing valve section and an actuator configured to open and close the opening/closing valve section. In the present embodiment, a stepping motor is employed as the actuator of the switching valve 12. While the switching valve 12 is in a valve closed state, the first refrigerant circulation passage is open and the second refrigerant circulation passage is shut off. In contrast, while the switching valve 12 is in a valve open state, the second refrigerant circulation passage is open. In this state, since refrigerant flows through the bypass passage 25, the difference between an upstream pressure and a downstream pressure of the expansion valve 18 is lower than a preset pressure difference. As a result, the differential pressure regulating valve included in the expansion valve 18 closes and the first refrigerant circulation passage is shut off.

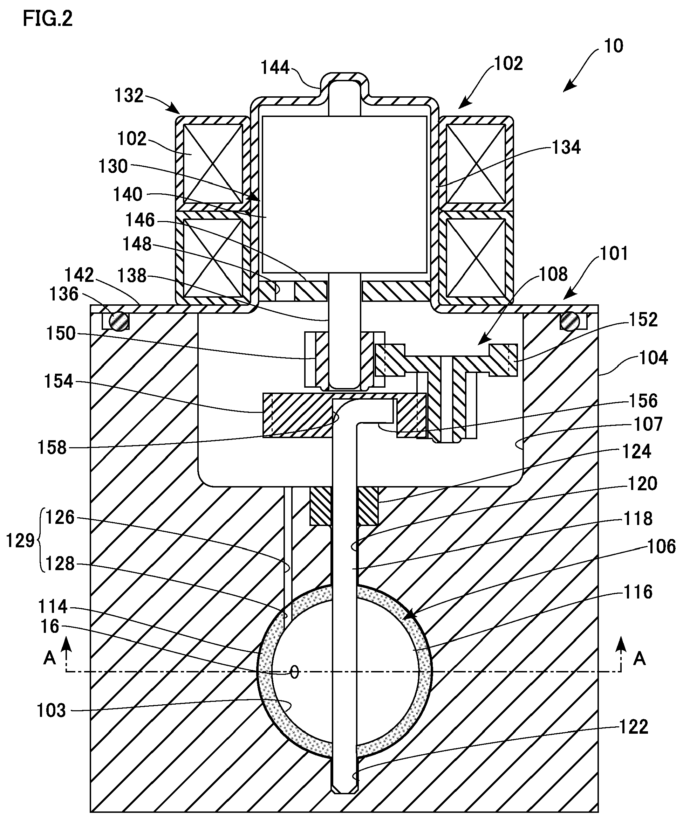

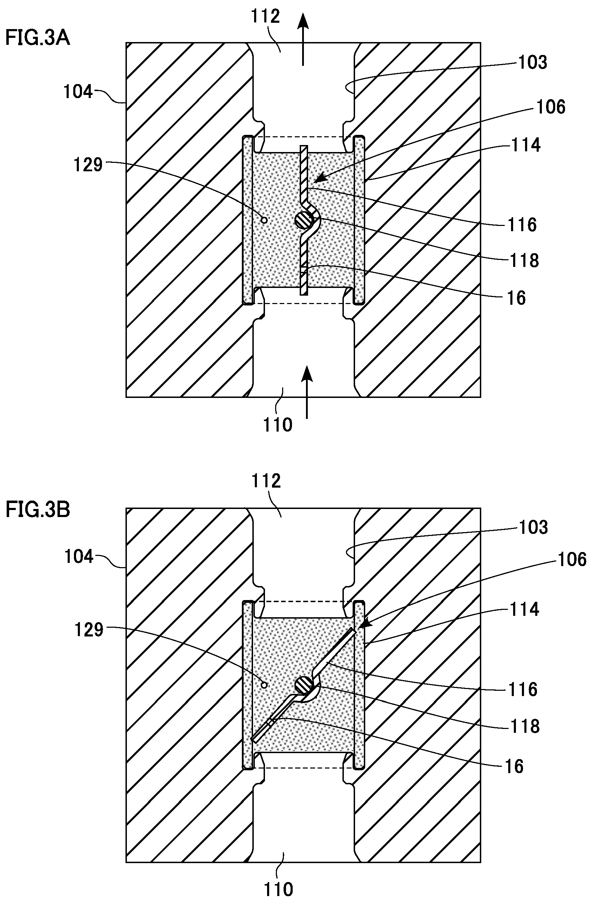

FIG. 2 is a cross-sectional view schematically illustrating a structure of a switching valve. FIGS. 3A and 3B are cross-sectional views along arrows A-A in FIG. 2. FIG. 3A illustrates a valve open state, and FIG. 3B illustrates a valve closed state. As illustrated in FIG. 2, the switching valve 10 is a stepping motor driven two-way valve, and is formed by assembly of a valve body 101 and a motor unit 102. The valve body 101 includes a body 104 through which a refrigerant passage 103 is formed, a butterfly valve 106 accommodated in the body 104 and configured to open and close the refrigerant passage 103, and a drive mechanism 108 configured to open and close the butterfly valve 106. The motor unit 102 is mounted on one end of the body 104 and accommodates the drive mechanism 108 in an accommodation chamber 107 formed between the motor unit 102 and the body 104.

The body 104 can be produced by cutting or the like of an aluminum alloy. As also illustrated in FIGS. 3A and 3B, a linear refrigerant passage 103 is formed to extend through the body 104. An inlet port 110 through which refrigerant is introduced from the upstream side is provided at one end of the refrigerant passage 103, and an outlet port 112 through which refrigerant is delivered to the downstream side is provided at the other end thereof. In the middle of the refrigerant passage 103 (an area where a passage open at the inlet port 110 and a passage open at the outlet port 112 join), a cylindrical sleeve 114 is fixed in such a manner that the sleeve 114 and the refrigerant passage 103 are concentric. The sleeve 114 is a sealing member for airtight touching and leaving of a valve element 116 (functioning as a "plate"), which will be described later, of the butterfly valve 106, and is made of an elastic material (such as rubber) or a flexible material.

The butterfly valve 106 includes an oval valve element 116 and an elongated shaft 118 that is a rotational shaft of the valve element 116. The valve element 116 and the shaft 118 are both made of stainless steel and are connected to each other by spot welding. Detailed description of the butterfly valve 106 will be provided later.

The body 104 has an insertion hole 120 in which an intermediate part of the shaft 118 is inserted and a bearing hole 122 for supporting a lower part of the shaft 118, which are coaxially formed therein. In this manner, the shaft 118 extends across the refrigerant passage 103 in a radial direction thereof and is rotatably supported by the body 104. A ring-shaped shaft support member 124 is press-fitted in an upper end portion of the insertion hole 120, and the shaft 118 is supported so as to be rotatable about the axis by the shaft support member 124 and the bearing hole 122.

The body 104 also has a communicating hole 126 having a small diameter in parallel with the insertion hole 120. In addition, the sleeve 114 also has a communicating hole 128 formed coaxially with the communicating hole 126 and connecting inside and outside of the sleeve 114. The communicating holes 126 and 128 constitute a communicating path 129 connecting the accommodation chamber 107 and the refrigerant passage 103. In the present embodiment, cross sections of the communicating holes 126 and 128 have approximately equal diameters, and cross-sectional areas larger than that of a clearance between the shaft 118 and the shaft support member 124.

The motor unit 102 is a stepping motor including a rotor 130 and a stator 132. A can 134 that defines a pressure acting space in which the pressure of the refrigerant acts and a non pressure acting space in which the pressure of the refrigerant does not act is fixed to an upper face of the body 104, the rotor 130 is disposed inside of the can 134 and the stator 132 is disposed outside thereof. The can 134 is made of a nonmagnetic member, functions in this manner as a defining member (partition) for defining the inside and the outside of the pressure acting space in which the butterfly valve 106 and the drive mechanism 108 are disposed, and also functions as a sleeve that supports the rotor 130 and the stator 132 while providing a magnetic gap therebetween.

The rotor 130 includes an elongated rotational shaft 138 and a magnet 140 disposed around the circumference of the rotational shaft 138. In the present embodiment, the magnet 140 is magnetized with 24 poles. The can 134 has a stepped cylindrical shape with a flange part 142 extending radially outward at a lower end opening thereof. The flange part 142 is connected to the body 104 via an O-ring 136, which ensures airtightness inside the can 134.

A shaft support part 144 protruding upward is formed at the center of an upper end portion of the can 134, and a disc-shaped bearing member 146 is press-fitted in the lower end opening of the can 134. The rotational shaft 138 is supported by the shaft support part 144 and the bearing member 146 so as to be rotatable about the axis. The bearing member 146 has a communicating hole 148 connecting an internal space of the can 134 and the accommodation chamber 107. The internal space of the can 134 and the accommodation chamber 107 constitute the "pressure acting space" communicating with the refrigerant passage 103 via the communicating path 129.

The rotational shaft 138 and the shaft 118 are connected via the drive mechanism 108. The drive mechanism 108 includes a cylindrical gear 150 fixed to a lower end portion of the rotational shaft 138, a first reduction gear 152 rotatably supported by a not-shown rotational shaft disposed in the body 104, and a second reduction gear 154 supported by an upper end portion of the shaft 118. Rotation of the cylindrical gear 150 is reduced in two steps via the reduction gears 152 and 154. The upper end portion of the shaft 118 is bent perpendicularly to the axis to form a fitting part 156, and a fitting recess 158 is formed at a lower surface of the second reduction gear 154. The shaft 118 is integrally coupled to the second reduction gear 154 in such a manner that the fitting part 156 is fitted into the fitting recess 158. The gears are positioned so that the rotational shaft 138 and the shaft 118 are coaxially disposed.

When the valve element 116 rotates (turns) 45 degrees from a fully open state illustrated in FIG. 3A, an outer peripheral edge (edge portion) thereof is stopped by the sleeve 114 as illustrated in FIG. 3B and the valve element 116 becomes in a fully closed state. While the valve element 116 has a rotation range only in one direction from the fully open state along the axis of the refrigerant passage 103 (that is, having a rotation angle of 45 degrees) in the present embodiment, the rotation range may extend in one direction and in a direction opposite thereto from the fully open state (that is, the rotation range may have an angle of 90 degrees).

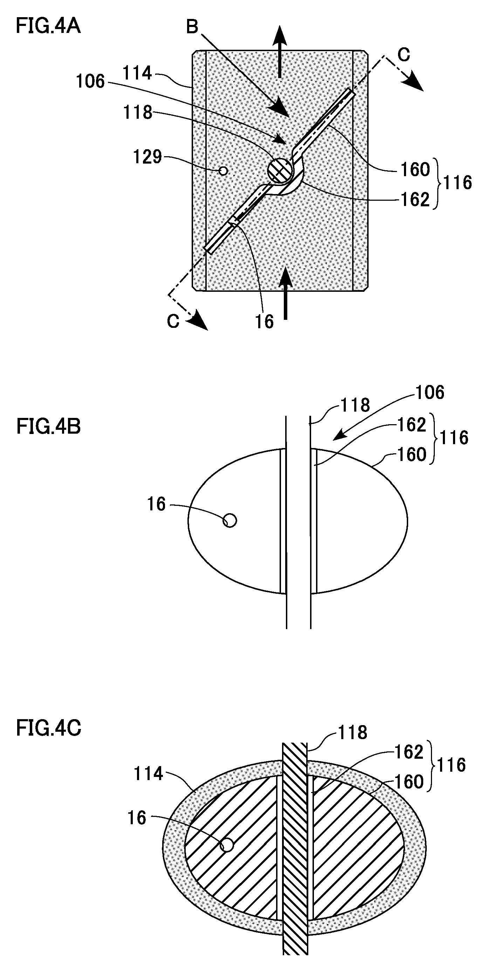

Next, details of the structure of the butterfly valve 106 will be described. FIGS. 4A to 4C shows views of the butterfly valve and peripheral structures thereof. FIG. 4A illustrates the valve closed state of the butterfly valve. FIG. 4B illustrates a structure of the butterfly valve alone and corresponds to a view along an arrow B. FIG. 4C is a cross-sectional view along arrows C-C in FIG. 4A.

As illustrated in FIGS. 4A and 4B, the valve element 116 is press-formed so that an oval body 160 thereof is bent or curved at the middle in the long axis direction to form a recessed groove 162 parallel to the short axis. Spot welding is conducted so that the shaft 118 fits along the recessed groove 162. As a result, the short axis of the body 160 is in alignment with the axis of the shaft 118. The orifice 16 that is a small hole is formed in one side of the body 160 with respect to the shaft 118 in the thickness direction thereof. In the present embodiment, the orifice 16 is formed on the long axis of the body 160.

As illustrated in FIGS. 4A and 4C, the valve element 116 has the oval shape defined so that the outer peripheral edge (edge portion) of the body 160 is in close contact with and along an inner surface of the sleeve 114 forming no gap between the body 160 and the sleeve 114 in the valve closed state of the butterfly valve 106. This ensures the sealing property between the body 160 and the sleeve 114 and refrigerant can flow only through the orifice 16 while the butterfly valve 106 is closed. As illustrated in FIG. 4A, note that the communicating path 129 (the communicating hole 128) is formed at a position downstream of the valve element 116 in the flow direction of refrigerant (indicated by thick arrows in the figure), that is, on the lower pressure side of the butterfly valve 106 in the valve closed state. As a result, the pressure acting space inside the can 134 is likely to have a relatively low pressure. This reduces adverse effects due to high pressures inside the can 134, such as preventing excessive stress concentration on the connection of the can 134 and the body 104.

The structure of the switching valve 12 is similar to that of the switching valve 10 except that the orifice 16 is not formed. The communicating path 129 of the switching valve 12 is also formed at a position on the lower pressure side of the butterfly valve 106 in the valve closed state. Thus, detailed description of the switching valve 12 will not be provided.

As described above, since the switching valves 10 and 12 of the present embodiment are butterfly valves 106, the refrigerant passages can be formed linearly. Since the shapes of refrigerant flow passages are not complicated, pressure loss of refrigerant passing therethrough can be reduced. As a result, high cooling capacity and heating capacity of the automotive air conditioner 1 can be maintained. In addition, the switching valves 10 and 12 themselves have simple structures, and can thus be fabricated at low costs. Furthermore, the valve element 116 of each butterfly valve 106 has a substantially symmetric shape with respect to the shaft 118, which can keep the driving torque thereof low. As a result, power consumption in driving the motor unit 102 (stepping motor) can also be reduced. According to the present embodiment, the switching valves 10 and 12 can thus be achieved at low costs with simple structures and reduced power consumption.

In addition, since the communicating path 129 is formed between the pressure acting space inside of the can 134 and the refrigerant passage 103 so as to facilitate the flow of refrigerant to and from the inside of the can 134, the pressure inside the can 134 can be prevented from being excessively high. In particular, since the communicating path 129 connects the pressure acting space inside the can 134 and the low-pressure region in the refrigerant passage 103, the pressure inside the can 134 can be kept relatively low. Furthermore, since no sealing member is provided at the sliding portion of the shaft 118, the sliding friction at the sliding portion can be made lower, which also contributes to reduction in the operating torque. With regard to the butterfly valve 106, since the recessed groove 162 is positioned to face the low-pressure region, the connection of the body 160 and the shaft 118 can be stably maintained. In other words, if the recessed groove 162 is positioned to face a high-pressure region, a differential pressure acts in a direction separating the body 160 away from the shaft 118 (a differential pressure acts in a direction detaching the body 160 and the shaft 118 from each other). As a result, an excessive force is applied to the connection thereof, which may damage the connection. In the present embodiment, however, since the connection faces the low-pressure region, a differential pressure acts in a direction pressing the body 160 against the shaft 118, which can avoid such a problem.

[Second Embodiment]

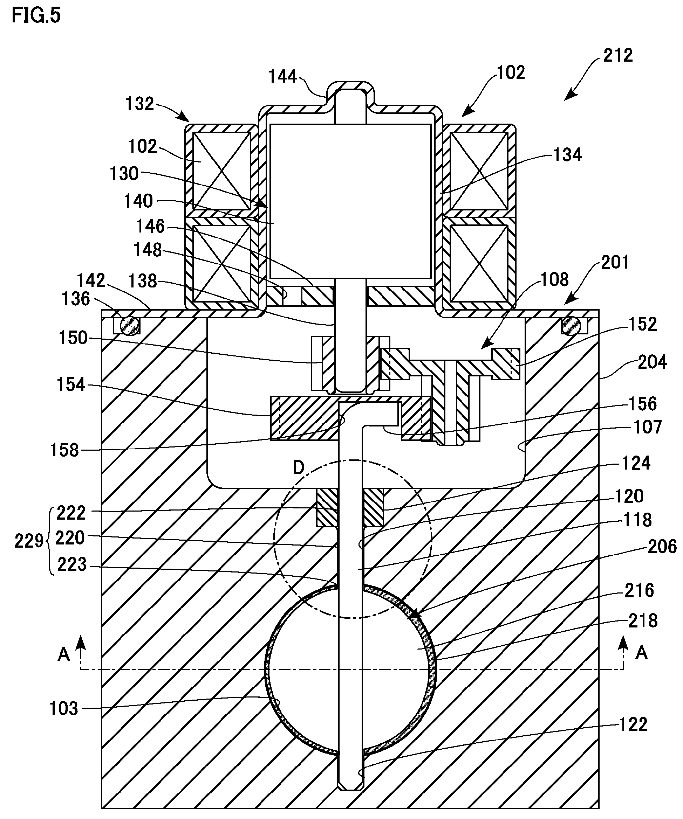

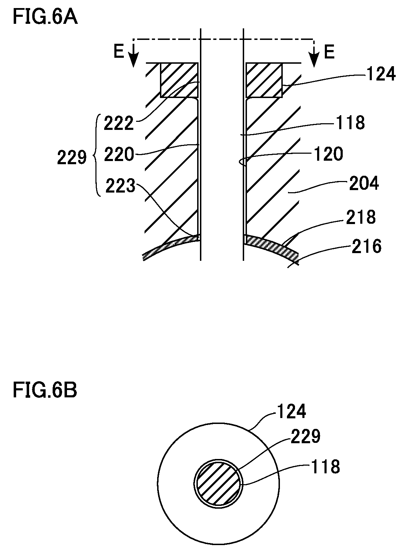

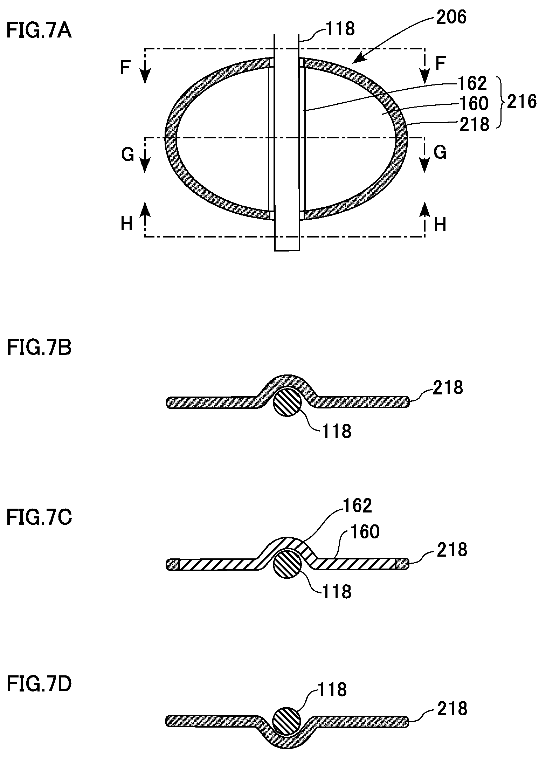

FIG. 5 is a cross-sectional view schematically illustrating a structure of a switching valve according to a second embodiment. FIGS. 6A and 6B are partial enlarged views illustrating a structure of a communicating path. FIG. 6A is an enlarged view of part D in FIG. 5, and FIG. 6B is a view along arrows E-E in FIG. 6A. FIGS. 7A to 7D are views of a butterfly valve and peripheral structures thereof. FIG. 7A illustrates a structure of the butterfly valve alone. FIG. 7B is a cross-sectional view along arrows F-F in FIG. 7A, FIG. 7C is a cross-sectional view along arrows G-G in FIG. 7A, and FIG. 7D is a cross-sectional view along arrows H-H in FIG. 7A.

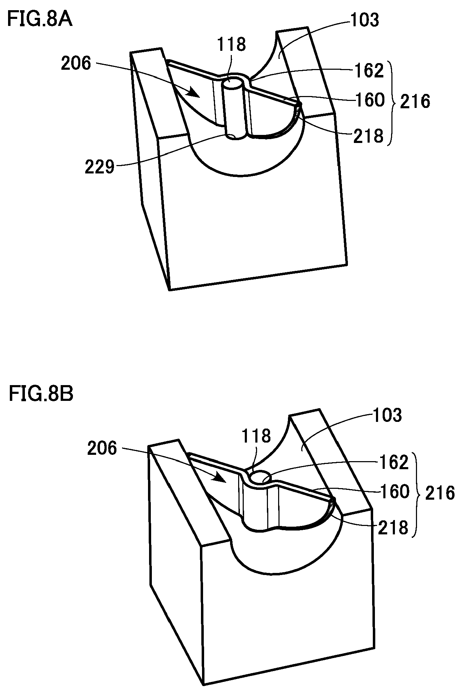

In the following, differences from the first embodiment will be mainly described. In these figures, components that are substantially the same as those in the first embodiment will be designated by the same reference numerals. FIGS. 8A and 8B are perspective views schematically illustrating a valve closed state of the butterfly valve and corresponding to a cross section along arrows A-A in FIG. 5. FIG. 8A is a view from the side of a low-pressure region, and FIG. 8B is a view from the side of a high-pressure region.

In the present embodiment, a switching valve 212 illustrated in FIG. 5 is provided instead of the switching valve 12 of the first embodiment. The switching valve 212 is formed by assembly of a valve body 201 and a motor unit 102. A valve body 201 includes a butterfly valve 206 accommodated in a body 204 and configured to open and close a refrigerant passage 103, and a drive mechanism 108 configured to open and close the butterfly valve 206. The body 204 does not have the communicating path 129 formed therethrough as in the first embodiment, but has a communicating path 229 along the part where the shaft 118 is inserted. Specifically, as also illustrated in FIGS. 6A and 6B, the communicating path 229 is formed by a clearance 220 between the insertion hole 120 in the body 204 and the shaft 118, a clearance 222 between the shaft support member 124 and the shaft 118, and a clearance 223 between a sealing member 218 and the shaft 118.

The refrigerant passage 103 is not provided with the sleeve 114 as in the first embodiment, but the butterfly valve 206 is provided with a sealing structure. Specifically, as also illustrated in FIGS. 7A to 7D, the butterfly valve 206 is formed by fixing a valve element 216 to the shaft 118, and the sealing member 218 is provided along a peripheral edge of the valve element 216. The sealing member 218 of the present embodiment is made of rubber, and baked along an outer surface of the body 160. In a modification, the sealing member 218 may be an elastic member such as rubber integrated with the body 160 in such a manner that the elastic member is fitted into the outer circumference of the body 160. As a result of making rubber cover the peripheral edge of the valve element instead of using rubber as a component such as a sleeve, use of rubber components can be suppressed, and occurrence of blister phenomena, which is a concern in application to a refrigeration cycle, can be suppressed.

As illustrated in FIGS. 8A and 8B, in the valve closed state of the butterfly valve 206, the sealing member 218 is in close contact with and along an inner wall surface of the refrigerant passage 103, which ensures the sealing property between the valve element 216 and the refrigerant passage 103. In the present embodiment as well, the communicating path 229 is formed at a position downstream of the valve element 216 in the flow direction of refrigerant, that is, on the lower pressure side of the butterfly valve 206 in the valve closed state. Specifically, the recessed groove 162 is positioned to face the low-pressure region, the shape of the sealing member 218 is along the peripheral shape of the body 160, and the communicating path 229 is thus open to the low-pressure region. As a result, the pressure acting space inside the can 134 is likely to have a relatively low pressure.

Note that a switching valve similar to that of the present embodiment may be provided instead of the switching valve 10 of the first embodiment. This switching valve can be achieved by forming an orifice 16 in the valve element 216 of the switching valve 212 illustrated in FIG. 5.

(Modification)

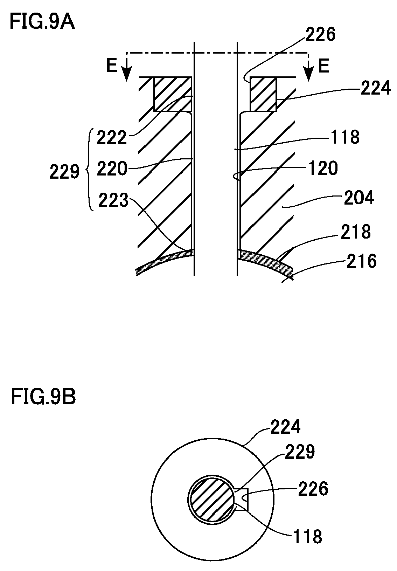

In the second embodiment described above, an embodiment of an example in which the communicating path 229 is formed along the part where the shaft 118 is inserted has been presented. FIGS. 9A and 9B are partial enlarged views illustrating a structure of a communicating path according to a modification of the second embodiment. FIG. 9A corresponds to an enlarged view of the part D in FIG. 5, and FIG. 9B is a view along arrows E-E in FIG. 9A. In the present modification, a communicating groove 226 parallel to the axis is formed in an inner surface of a shaft support member 224. As a result of enlarging the communicating path 229 by using a part that does not affect the sealing of the refrigerant passage 103 in this manner, it is possible to improve the effect of facilitating circulation of refrigerant through the communicating path 229. Note that the number of communicating paths 226 may be one or more than one.

[Third Embodiment]

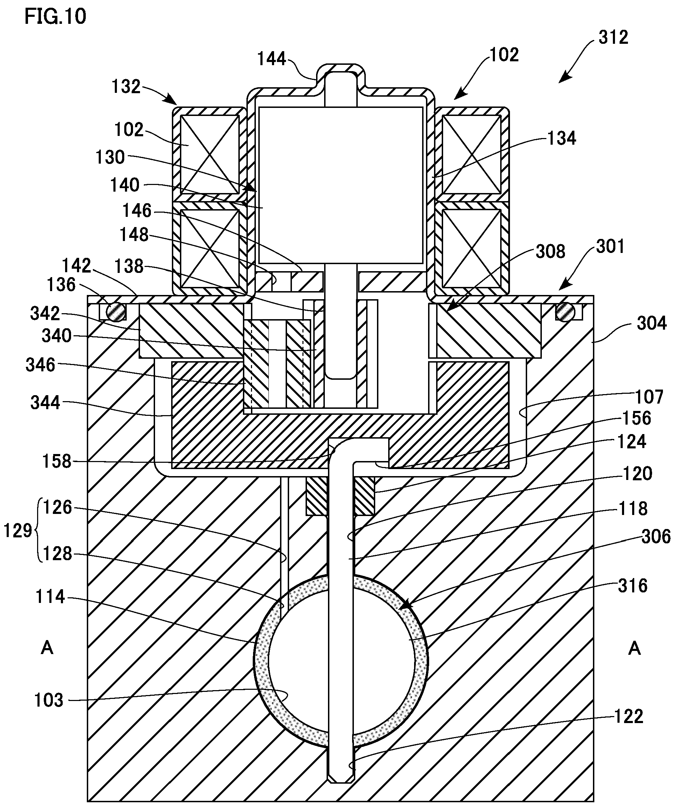

FIG. 10 is a cross-sectional view schematically illustrating a structure of a switching valve according to a third embodiment. In the following, differences from the first and second embodiments will be mainly described. In FIG. 10, components that are substantially the same as those in the first and second embodiments will be designated by the same reference numerals.

In the present embodiment, a switching valve 312 illustrated in FIG. 10 is provided instead of the switching valve 12 of the first embodiment. The switching valve 312 is formed by assembly of a valve body 301 and a motor unit 102. A valve body 301 includes a butterfly valve 306 accommodated in a body 304 and configured to open and close a refrigerant passage 103, and a drive mechanism 308 configured to open and close the butterfly valve 306. The butterfly valve 306 has a structure without the orifice 16 of the butterfly valve 106 illustrated in FIG. 2.

The drive mechanism 308 of the switching valve 312 has a mechanical paradox planetary gear reduction mechanism. Specifically, the drive mechanism 308 includes a sun gear 340 fixed to a rotational shaft 138 of the motor unit 102, a fixed internal gear 342 fixed to an upper end portion of the body 304, a movable internal gear 344 connected to an upper end portion of the shaft 118, and a plurality of planetary gears 346. The planetary gears 346 mesh with the sun gear 340 on one side and with the fixed internal gear 342 and the movable internal gear 344 on the other side. In the present embodiment, three planetary gears 346 are disposed at 120-degree intervals around the sun gear 340. As a result of employing such a mechanical paradox planetary gear reduction mechanism, a high reduction ratio can be obtained. Since structures of such mechanical paradox planetary gears are known, detailed description thereof will not be provided.

Note that a switching valve similar to that of the present embodiment may be provided instead of the switching valve 10 of the first embodiment. This switching valve can be achieved by forming an orifice 16 in the valve element 316 of the switching valve 312 illustrated in FIG. 10. In a modification, planetary gears other than the mechanical paradox planetary gears may be employed as the drive mechanism 308.

[Fourth Embodiment]

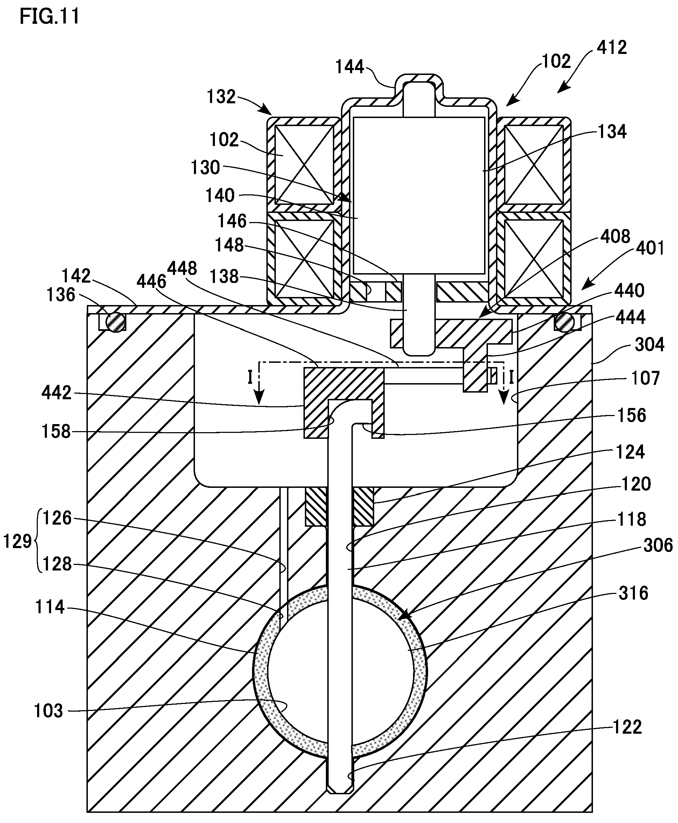

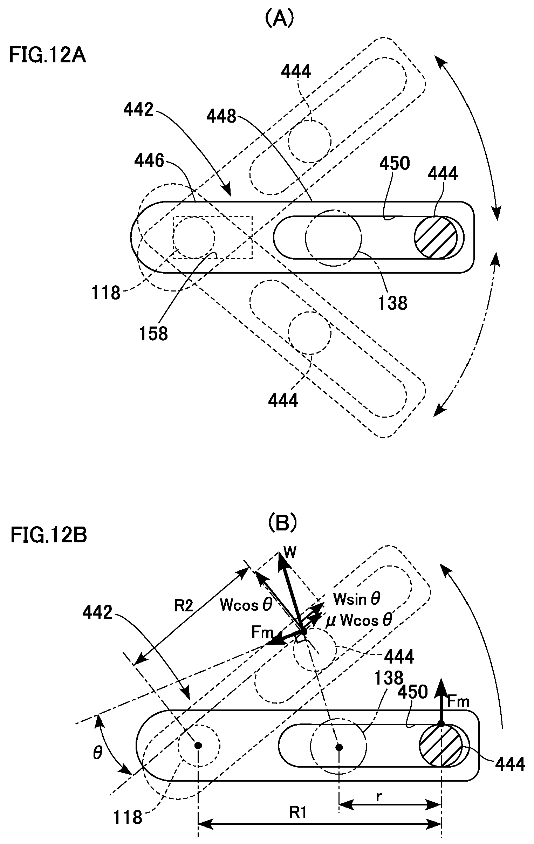

FIG. 11 is a cross-sectional view schematically illustrating a structure of a switching valve according to a fourth embodiment. FIGS. 12A and 12B are views along arrows I-I in FIG. 11. FIG. 12A illustrates an operating range of a link mechanism, and FIG. 12B illustrates a change in the rotational torque of the shaft 118 caused by the link mechanism. In the following, differences from the first to third embodiments will be mainly described. In these figures, components that are substantially the same as those in the first to third embodiments will be designated by the same reference numerals.

In the present embodiment, a switching valve 412 illustrated in FIG. 11 is provided instead of the switching valve 12 of the first embodiment. The switching valve 412 is formed by assembly of a valve body 401 and a motor unit 102. A drive mechanism 408 of the switching valve 412 has a link mechanism. Specifically, the drive mechanism 408 includes an actuating member 440 fixed to a rotational shaft 138 of the motor unit 102, and a linking member 442 coupled to an upper end portion of the shaft 118. The actuating member 440 has an actuating rod 444 extending downward at a position eccentric with respect to the rotational shaft 138.

As also illustrated in FIG. 12A, the linking member 442 has a body 446 coupled to the upper end portion of the shaft 118, and an arm part 448 extending perpendicularly to the shaft 118 from the body 446. The arm part 448 has a fitting groove 450 extending in a longitudinal direction thereof. In addition, the actuating member 440 and the linking member 442 are coupled to each other in such a manner that the actuating rod 444 is fitted in the fitting groove 450 so that the actuating member 440 and the linking member 442 are displaceable relative to each other. Thus, when the rotational shaft 138 is rotated (see two-dot chain lines) by being driven by the motor unit 102, the actuating rod 444 swings about the rotational shaft 138 (see two-dot chain lines shown for convenience sake), and as a result, the linking member 442 swings about the axis of the shaft 118. In the present embodiment, as indicated by solid arrows, the arm part 448 swings within a range (of 40 degrees or 45 degrees, for example) between a position indicated by solid lines and a position indicated by broken lines. The actuating rod 444 rotates about the axis of the rotational shaft 138, and is thus displaced relative to the arm part 448.

The swing of the linking member 442 in this manner causes the shaft 118 to rotate about the axis, so that the opening degree of the butterfly valve 306 is adjusted. In the present embodiment as well, in order to position the communicating path 129 in the low-pressure region, the swinging range of the arm part 448 is the range indicated by solid arrows, which restricts the rotation range of the shaft 118 and therefore the valve element 316. Thus, the valve closing direction and the operating range of the valve element 316 are restricted. In a modification, the swinging range of the arm part 448 may be extended to include the range indicated by the two-dot chain arrows. This enables the valve closing direction of the valve element 316 to be reversed.

Furthermore, with the link mechanism of the present embodiment, the rotational torque of the shaft 118 can be increased when the butterfly valve 306 closes, that is, when the valve element 316 comes into contact with the sleeve 114. As a result, the sleeve 114 (sealing member) is more easily elastically deformed to a proper extent, which improves the sealing property while the valve is closed. Specifically, when a driving torque Tm transmitted by the rotational shaft 138 of the motor unit 102 is assumed to be constant, the following expression (1) is satisfied on the basis of FIG. 12B:

$$Tm = Fm \cdot r \qquad \ldots (1)$$

Fm: the rotational force of the motor unit 102
r: the radius of rotation of the actuating rod 444 about the rotational shaft 138.

In this case, a rotational torque Ta of the shaft 118 when the butterfly valve 306 is fully open (the position indicated by solid lines) is expressed by the following expression (2):

$$Ta = Fm \cdot R1 \qquad \ldots (2)$$

R1: the distance between the shaft 118 and the actuating rod 444 when the valve is fully open.

In the link mechanism, note that the direction in which the force transmitted from the actuating rod 444 to the linking member 442 acts differs between the valve open state and the valve closed state as illustrated. Specifically, the angle between a face of the fitting groove 450 in contact with the actuating rod 444 and the vector of the rotational force Fm is 90 degrees while the valve is fully open, and $\theta$ (< 90 degrees) while the valve is closed. When the coefficient of friction between the actuating rod 444 and the fitting groove 450 is represented by $\mu$, the following expression (3) is satisfied in the valve closed state:

$$Fm \cdot \cos\theta = W \cdot \sin\theta + \mu \cdot W \cdot \cos\theta \qquad \dots (3)$$

W: the thrust acting between the actuating rod 444 and the fitting groove 450 while the valve is closed.

On the other hand, a rotational torque Tb of the shaft 118 when the butterfly valve 306 is closed (the position indicated by broken lines) is expressed by the following expression (4):

$$Tb = W \cdot \cos\theta \cdot R2 \qquad \dots (4)$$

R2: the distance between the shaft 118 and the actuating rod 444 when the valve is closed.

Thus, the expressions (2) to (4) are rearranged in such a manner that W and Fm are eliminated, and the following expression (5) is obtained:

$$Tb/Ta = R2 \cdot \cos 2\theta / \{R1 \cdot (\sin\theta + \mu\cos\theta)\} \qquad \dots (5).$$

If R2/R1 = 0.67, $\theta$ = 10 degrees, and $\mu$ = 0.1 are assigned, for example, Tb/Ta $\approx$ 2.4 is obtained. That is, the rotational torque of the shaft 118 in the valve closed state is increased 2.4 times that in the valve open state. Thus, according to the present embodiment, the rotational torque of the shaft 118 in the valve closed state can be increased by setting the angle between the vector of the rotational force Fm and the contact face of the fitting groove 450 in the valve closed state to an acute angle, which can improve the sealing property in the valve closed state.

Note that a switching valve similar to that of the present embodiment may be provided instead of the switching valve 10 of the first embodiment. This switching valve can be achieved by forming an orifice 16 in the valve element 316 of the switching valve 412 illustrated in FIG. 11.

[Fifth Embodiment]

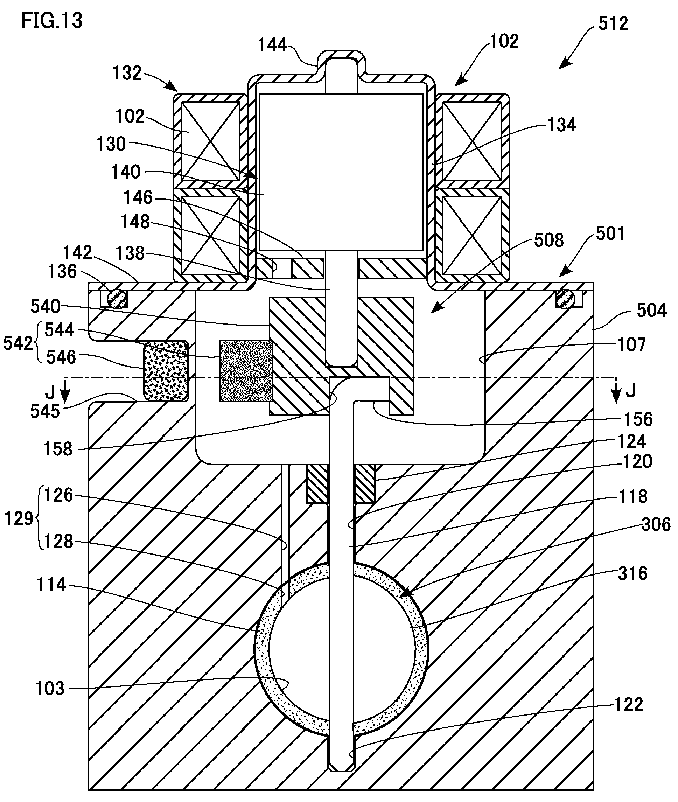

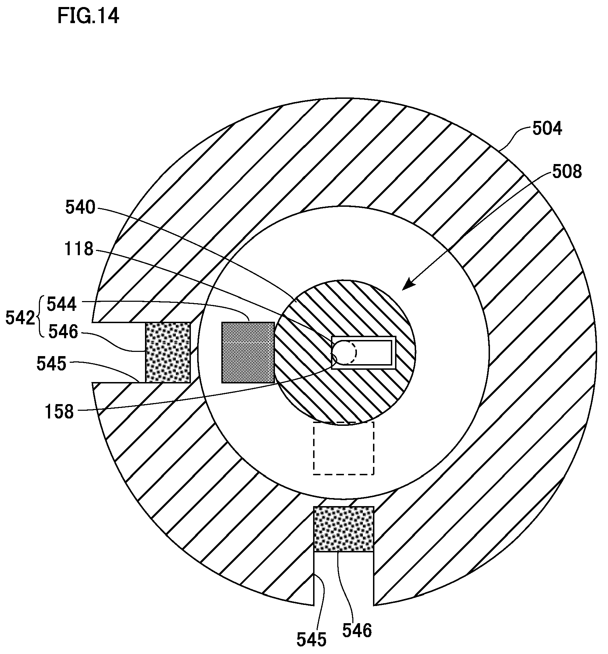

FIG. 13 is a cross-sectional view schematically illustrating a structure of a switching valve according to a fifth embodiment. FIG. 14 is a cross-sectional view along arrows J-J in FIG. 13. In the following, differences from the first to fourth embodiments will be mainly described. In the figures, components that are substantially the same as those in the first to fourth embodiments will be designated by the same reference numerals.

In the present embodiment, a switching valve 512 is provided instead of the switching valve 12 of the first embodiment. The switching valve 512 is formed by assembly of a valve body 501 and a motor unit 102. A drive mechanism 508 of the switching valve 512 is a direct mechanism connecting a rotational shaft 138 and a shaft 118 with a connecting member 540 therebetween. The switching valve 512 includes a rotation sensor 542 for detecting the opening degree of the butterfly valve 306.

As also illustrated in FIG. 14, the rotation sensor 542 includes a magnet 544 fixed to an outer surface of the connecting member 540, and a plurality of Hall elements 546 fixed near an inner surface of the body 504. In the present embodiment, two accommodation holes 545 are formed in the body 504 at positions shifted from each other by 90 degrees about the axis of the shaft 118, and the Hall elements 546 are disposed in the respective accommodation holes 545. When the connecting member 540 rotates with rotation of a valve element 316, the magnet 544 moves toward or away from each of the Hall elements 546. When the magnet 544 approaches a Hall element 546, a detection signal (Hall voltage) proportional to the magnetic flux density is output from the Hall element 546. On the basis of the output of the detection signal, the open/closed state (rotation angle, valve opening degree) of the valve element 316 can be detected. In the present embodiment, it is determined that the valve element 316 has rotated in one direction and the switching valve 512 has become in the valve closed state on the basis of a detection signal from one Hall element 546, and it is determined that the valve element 316 has rotated in the opposite direction and the switching valve 512 has become in the valve closed state on the basis of a detection signal from the other Hall element 546.

Note that a switching valve similar to that of the present embodiment may be provided instead of the switching valve 10 of the first embodiment. This switching valve can be achieved by forming an orifice 16 in the valve element 316 of the switching valve 512 illustrated in FIG. 13.

While an example in which the rotation sensor is applied to a switching valve having no reducer has been presented in the present embodiment, a similar rotation sensor may be applied to a switching valve having a reducer. In such a case, a magnet may be attached to an output shaft of a motor, that is the shaft 118, for example, and two Hall elements may be disposed at positions in the body where the Hall elements can face the magnet at predetermined intervals (90-degree intervals, for example). Alternatively, a magnet for detection may be provided integrally with the rotor and Hall elements may be disposed at positions in the can or the like where the Hall elements can face the magnet. Assume, for example, a case in which the reduction ratio of the reducer is 50:1 and the movable range of the butterfly valve is 90 degrees. In this case, for rotation of the valve element by 90 degrees, the rotor will rotate 90x50 = 4500 degrees. This corresponds to 12.5 rotations (= 4500/360) of the rotor. Thus, the position of the magnet varies depending on whether to rotate the valve element in one direction or in the opposite direction. For this reason, the Hall elements are disposed at an interval of a rotation angle corresponding to 0.5 rotations. That is, two Hall elements are disposed at positions shifted from each other by 180 degrees. In switching of the valve closing direction of the valve element, the Hall elements will output detection signals corresponding to 12 rotations until the switching is completed. Alternatively, for example, the reduction ratio may be 48:1 and the movable range of the butterfly valve may be 90 degrees. In this case, for rotation of the valve element by 90 degrees, the rotor will rotate 90x48 = 4320 degrees. This corresponds to 12 rotations (= 4320/360) of the rotor. Thus, the position of the magnet is the same whether the valve element is rotated in either direction. For this reason, only one Hall element may be provided.

[Sixth Embodiment]

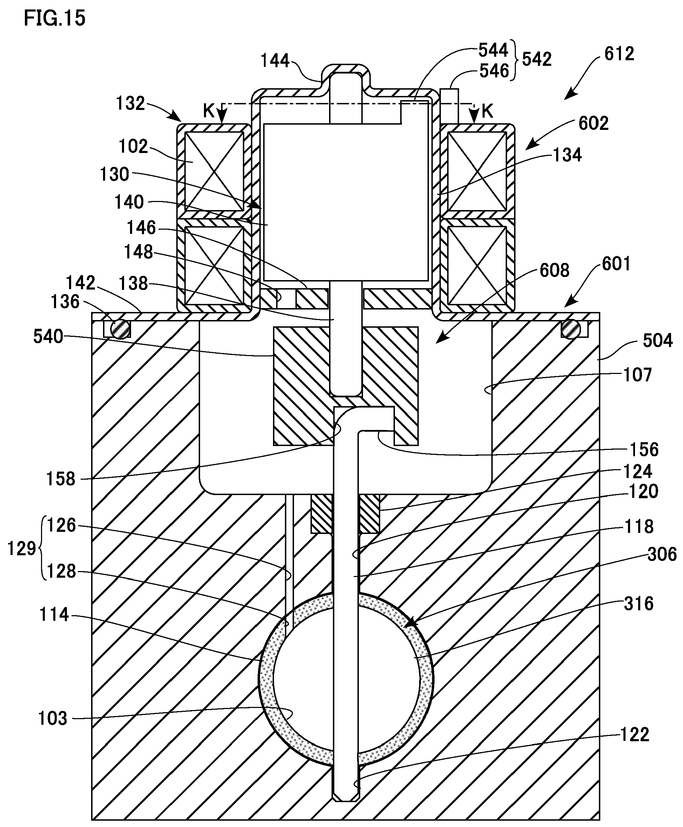

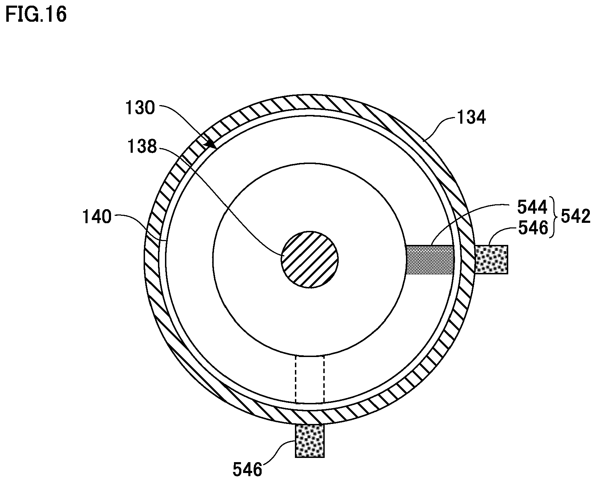

FIG. 15 is a cross-sectional view schematically illustrating a structure of a switching valve according to a sixth embodiment. FIG. 16 is a cross-sectional view along arrows K-K in FIG. 15. In the following, differences from the first to fifth embodiments will be mainly described. In these figures, components that are substantially the same as those in the first to fifth embodiments will be designated by the same reference numerals.
In the present embodiment, a switching valve 612 illustrated in FIG. 15 is provided instead of the switching valve 12 of the first embodiment. The switching valve 612 is formed by assembly of a valve body 601 and a motor unit 602. The switching valve 612 is different from that in the first embodiment in that the motor unit 602 is provided with a rotation sensor 542.
As also illustrated in FIG. 16, the rotation sensor 542 includes a magnet 544 provided integrally with a rotor 130, and a plurality of Hall elements 546 fixed to an outer surface of a can 134. In the present embodiment, the magnet 544 is disposed on an upper end peripheral edge of the rotor 130 in a protruding manner, and the Hall elements 546 are attached to the can 134 at positions at the same height as the magnet 544. The two Hall elements 546 are disposed at positions on the can 134 shifted from each other by 90 degrees about the axis of the rotational shaft 138. When the rotor 130 rotates with rotation of the valve element 316, the magnet 544 moves toward or away from each of the Hall elements 546. As a result, a detection signal proportional to the magnetic flux density is output from each Hall element 546. On the basis of the output of the detection signal, the open/closed state of the valve element 316 can be detected.
Note that a switching valve similar to that of the present embodiment may be provided instead of the switching valve 10 of the first embodiment. This switching valve can be achieved by forming an orifice 16 in the valve element 316 of the switching valve 612 illustrated in FIG. 15.

[Seventh Embodiment]

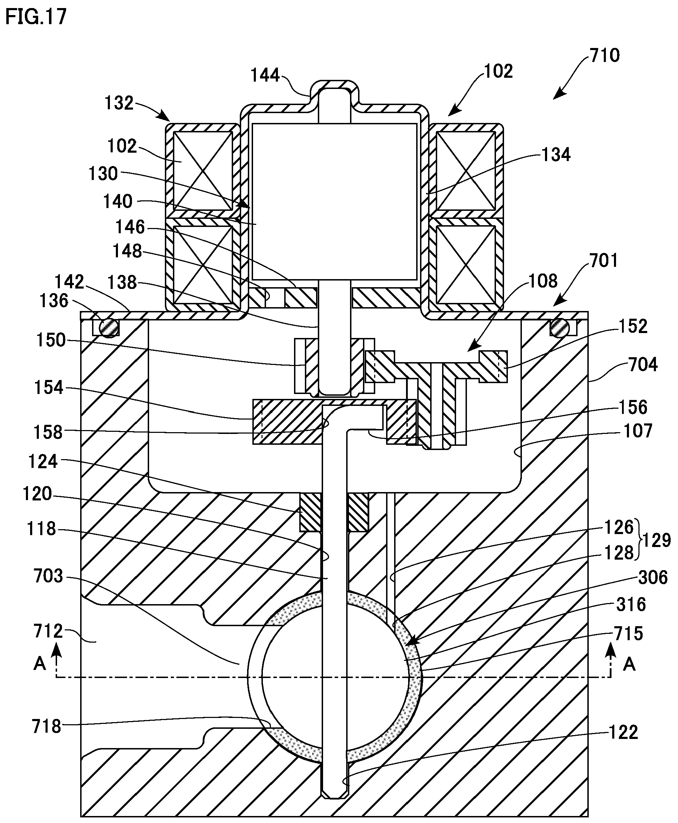

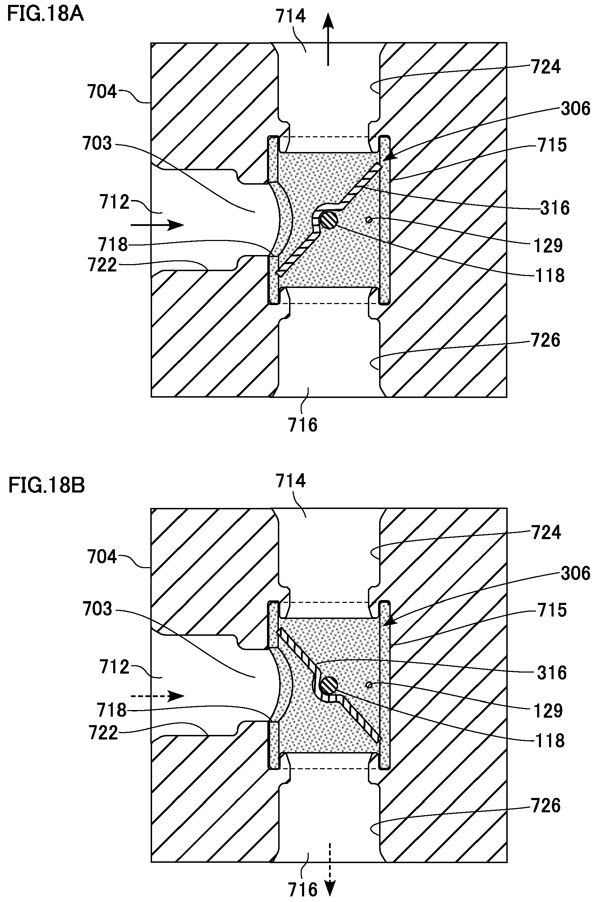

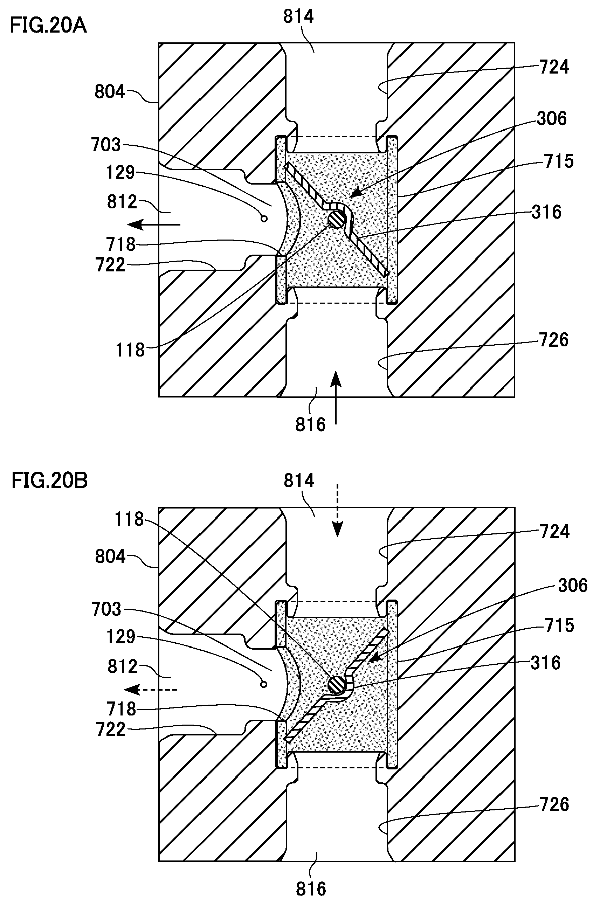

FIG. 17 is a cross-sectional view schematically illustrating a structure of a switching valve according to a seventh embodiment. FIGS. 18A and 18B are cross-sectional views along arrows A-A in FIG. 17. FIG. 18A illustrates a state during cooling operation, and FIG. 18B illustrates a state during heating operation. In the following, differences from the first to sixth embodiments will be mainly described. In these figures, components that are substantially the same as those in the first to sixth embodiments will be designated by the same reference numerals.
A switching valve 710 of the present embodiment is a three-way valve and applied to a refrigeration cycle illustrated in FIG. 20 of Patent Document 1 (Japanese Patent Application Laid-Open No. 2010-266062) mentioned above, for example. The switching valve 710 is disposed at a diverging point of a passage connecting a compressor and a condenser and a passage connecting the compressor and an evaporator (corresponding to the discharge-side three-way switching valve 1D in Patent Document 1).
As illustrated in FIG. 17, the switching valve 710 is formed by assembly of a valve body 701 and a motor unit 102. As also illustrated in FIGS. 18A and 18B, a body 704 has a T-shaped refrigerant passage 703 formed therethrough. Specifically, the body 704 has one inlet port 712 and two outlet ports 714 and 716. The inlet port 712 communicates with a discharge chamber of the compressor, the outlet port 714 communicates with an inlet of the condenser, and the outlet port 716 communicates with an inlet of the evaporator.
A passage 724 open at the outlet port 714 and a passage 726 open at the outlet port 716 are formed coaxially. A passage 722 open at the inlet port 712 is formed to be perpendicular to the passages 724 and 726. A sleeve 715 is provided at a converging region of the passages 722, 724, and 726, and a butterfly valve 306 is disposed there. A communicating hole 718 connecting the inside and the outside of the sleeve 715 is formed through a surface of the sleeve 715 facing the inlet port 712. A communicating path 129 is formed on the side opposite to the inlet port 712 with respect to the valve element 316.

Rotation of the valve element 316 in one direction and rotation thereof in the opposite direction are restricted in such a manner that an outer peripheral portion thereof is stopped by an inner wall surface of the sleeve 715. In these rotation-restricted states, two of the three ports 712, 714, and 716 are selectively made to communicate with one another. The passage open at the remaining port that is not made to communicate at this point is becomes a "specific region" in a low-pressure state. The communicating path 129 is formed so as to be always located in the specific region (low-pressure region) in the valve closed state.

Specifically, as illustrated in FIG. 18A, during cooling operation, operation of the butterfly valve 306 causes the inlet port 712 and the outlet port 714 to communicate with one another, and refrigerant flows from the compressor toward the condenser (see solid arrows). In this state, the communicating path 129 is located on the side of the passage 726 where the flow of refrigerant is blocked by the valve element 316. In contrast, as illustrated in FIG. 18B, during heating operation, operation of the butterfly valve 306 causes the inlet port 712 and the outlet port 716 to communicate with each other, and refrigerant flows from the compressor toward the evaporator (see dotted arrows). In this state, the communicating path 129 is located on the side of the passage 724 where the flow of refrigerant is blocked by the valve element 116. Thus, since the communicating path 129 is located in the low-pressure region both in the cooling operation mode and in the heating operation mode, the pressure acting space inside of the can 134 is kept at a low pressure.

[Eighth Embodiment]

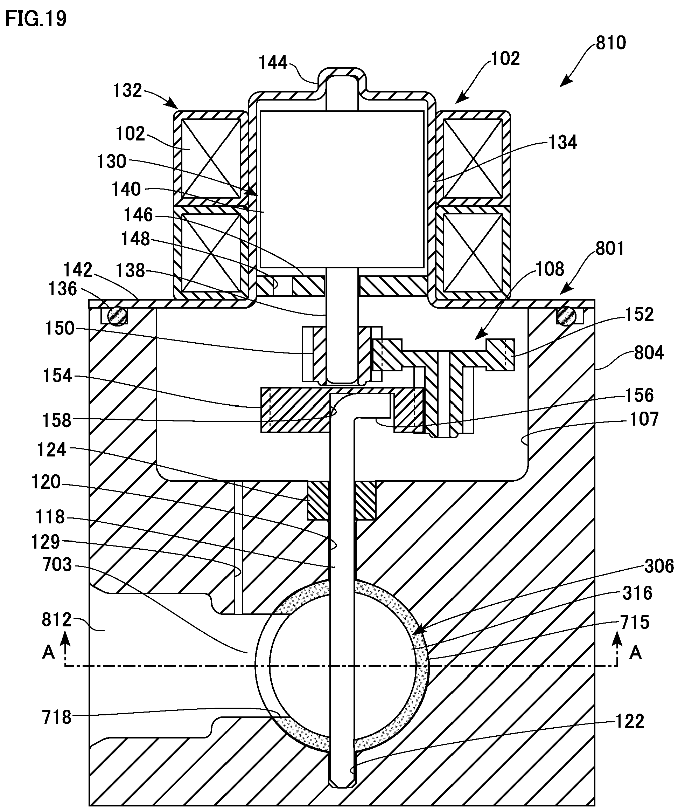

FIG. 19 is a cross-sectional view schematically illustrating a structure of a switching valve according to an eighth embodiment. FIGS. 20A and 20B are cross sectional views along arrows A-A in FIG. 19. FIG. 20A illustrates a state during cooling operation, and FIG. 20B illustrates a state during heating operation. In the following, differences from the first to seventh embodiments will be mainly described. In these figures, components that are substantially the same as those in the first to seventh embodiments will be designated by the same reference numerals.

A switching valve 810 of the present embodiment is a three-way valve and applied to a refrigeration cycle illustrated in FIG. 20 of Patent Document 1 mentioned above, for example. The switching valve 810 is disposed at a converging point of a passage connecting an evaporator and a compressor and a passage connecting a condenser and the compressor (corresponding to the discharge-side three-way switching valve 1E in Patent Document 1).

As illustrated in FIG. 19, the switching valve 810 is formed by assembly of a valve body 801 and a motor unit 102. As also illustrated in FIGS. 20A and 20B, a body 804 has a T-shaped refrigerant passage 703 formed therethrough. Specifically, the body 804 has two inlet ports 814 and 816 and one outlet port 812. The inlet port 816 communicates with an output of the evaporator, the inlet port 814 communicates with an outlet of the condenser, and the outlet port 812 communicates with a suction inlet of the compressor. A passage 724 open at the inlet port 814 and a passage 726 open at the inlet port 816 are formed coaxially. A communicating path 129 is formed on the side of the outlet port 812 with respect to the valve element 316. The communicating path 129 is formed so as to be always located in the low-pressure region (specific region).

Specifically, as illustrated in FIG. 20A, during cooling operation, operation of the butterfly valve 306 causes the inlet port 816 and the outlet port 812 to communicate with each other, and refrigerant flows from the evaporator toward the compressor (see solid arrows). In this state, the communicating path 129 is located on the side of the passage 722 where the flow of refrigerant is permitted by the valve element 316. In contrast, as illustrated in FIG. 20B, during heating operation, operation of the butterfly valve 306 causes the inlet port 814 and the outlet port 812 to communicate with each other, and refrigerant flows from the condenser toward the compressor (see dotted arrows). In this state, the communicating path 129 is located on the side of the passage 722 where the flow of refrigerant is permitted by the valve element 316. Thus, since the communicating path 129 is located in the low-pressure region both in the cooling operation mode and in the heating operation mode, the pressure acting space inside the can 134 is kept at a low pressure.

[Ninth Embodiment]

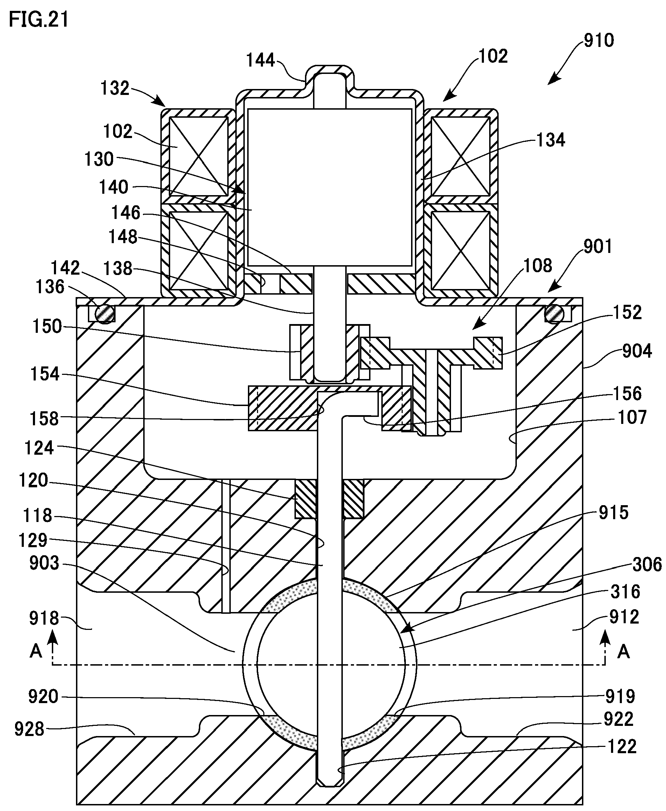

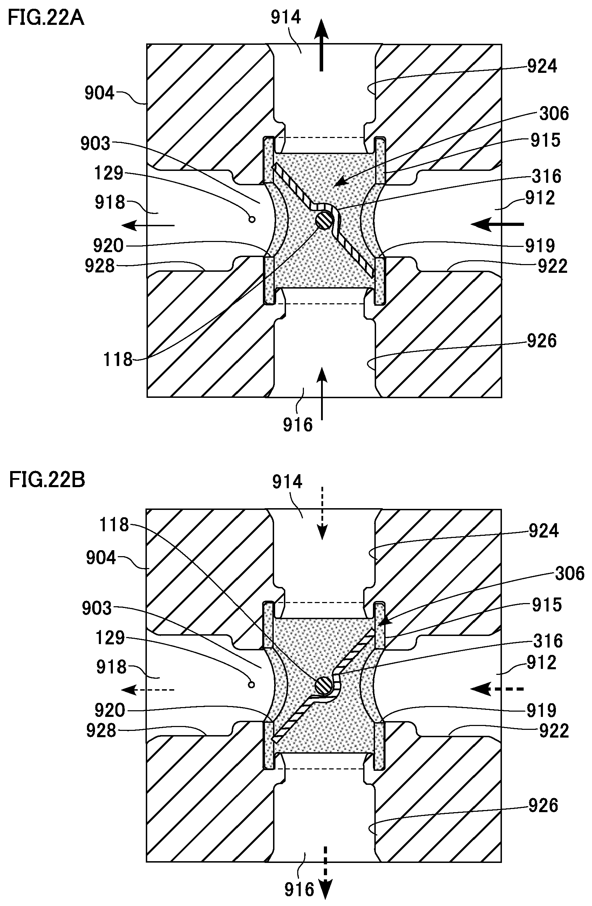

FIG. 21 is a cross-sectional view schematically illustrating a structure of a switching valve according to a ninth embodiment. FIGS. 22A and 22B are cross-sectional views along arrows A-A in FIG. 21. FIG. 22A illustrates a state during cooling operation, and FIG. 22B illustrates a state during heating operation. In the following, differences from the first to eighth embodiments will be mainly described. In these figures, components that are substantially the same as those in the first to eighth embodiments will be designated by the same reference numerals.

A switching valve 910 of the present embodiment is a four-way valve and applied to a refrigeration cycle illustrated in FIG. 12 of Patent Document 1 mentioned above, for example. The switching valve 910 is disposed between a compressor, a gas-liquid separator, a condenser, and an evaporator (corresponding to the four-way switching valve 320 in Patent Document 1).

EP 3 001 078 A1

As illustrated in FIG. 21, the switching valve 910 is formed by assembly of a valve body 901 and a motor unit 102. As also illustrated in FIGS. 22A and 22B, a body 904 has a cross-shaped refrigerant passage 903 formed therethrough. Specifically, the body 904 has one inlet port 912, two inlet/outlet ports 914 and 916, and one outlet port 918. The inlet port 912 communicates with a discharge chamber of the compressor, the inlet/outlet port 914 communicates with an outlet/inlet of the condenser, the inlet/outlet port 916 communicates with an outlet/inlet of the evaporator, and the outlet port 918 communicates with an inlet of the gas-liquid separator.

A passage 922 open at the inlet port 912 and a passage 928 open at the outlet port 918 are formed coaxially. A passage 924 open at the inlet/outlet port 914 and a passage 926 open at the inlet/outlet port 916 are formed coaxially. The passages 922 and 928 and the passages 924 and 926 are perpendicular to one another. A communicating hole 919 connecting the inside and the outside of a sleeve 915 is formed through a surface of the sleeve 915 facing the inlet port 912. A communicating hole 920 connecting the inside and the outside of the sleeve 915 is formed through a surface of the sleeve 915 facing the outlet port 918. A communicating path 129 is formed on the side of the outlet port 918 with respect to the valve element 316. The communicating path 129 is formed so as to be always located in the low-pressure region (specific region).

Specifically, as illustrated in FIG. 22A, during cooling operation, operation of the butterfly valve 306 causes the inlet port 912 and the inlet/outlet port 914 to communicate with each other, and high-pressure refrigerant flows from the compressor toward the condenser (see thick solid arrows). In addition, the inlet/outlet port 916 and the outlet port 918 are caused to communicate with each other, and low-pressure refrigerant flows from the evaporator toward the gas-liquid separator (see thin solid arrows). In contrast, as illustrated in FIG. 22B, during heating operation, operation of the butterfly valve 306 causes the inlet port 912 and the inlet/outlet port 916 to communicate with each other, and high-pressure refrigerant flows from the compressor toward the evaporator (see thick dotted arrows). In addition, the inlet/outlet port 914 and the outlet port 918 are caused to communicate with each other, and low-pressure refrigerant flows from the condenser toward the gas-liquid separator (see thin dotted arrows). Thus, since the communicating path 129 is located in the low-pressure region (specific region) both in the cooling operation mode and in the heating operation mode, the pressure acting space inside of the can 134 is kept at a low pressure.

The description of the present invention given above is based upon illustrative embodiments. These embodiments are intended to be illustrative only and it will be obvious to those skilled in the art that various modifications could be further developed within the technical idea underlying the present invention.

In the third to ninth embodiments, similarly to the first embodiment, examples of structures in which the communicating path 129 is formed in addition to the part where the shaft 118 is inserted have been presented. In a modification, the sealing structure of the valve section and the structure of the communicating path similar to those of the second embodiment will be applied to the switching valves of the third to ninth embodiments. Specifically, the clearance between the insertion hole of the body and the shaft, the clearance between the shaft support member and the shaft, the clearance between the sealing member and the shaft, and the like may be used so that the part where the shaft is inserted serves as the communicating path. In this case, the recessed groove of the valve element is made to face the low-pressure region.

The present invention is not limited to the above-described embodiments and modifications only, and the components may be further modified to arrive at various other embodiments without departing from the scope of the invention. Also, various other embodiments may be further formed by combining, as appropriate, a plurality of structural components disclosed in the above-described embodiments and modification. Also, one or some of all of the components exemplified in the above-described embodiments and modifications may be left unused or removed.

DESCRIPTION OF THE REFERENCE NUMERALS

| | |
|---|---|
| 1 | Automotive air conditioner |
| 2 | Compressor |
| 3 | Internal condenser |
| 5 | External heat exchanger |
| 7 | Evaporator |
| 8 | Accumulator |
| 10, 12 | Switching valve |
| 14 | Opening/closing valve section |
| 16 | Orifice |
| 18 | Expansion valve |
| 21 | First passage |
| 22 | Second passage |
| 23 | Third passage |

| | |
|---|---|
| 24 | Fourth passage |
| 25 | Bypass passage |
| 101 | Valve body |
| 102 | Motor unit |
| 103 | Refrigerant passage |
| 104 | Body |
| 106 | Butterfly valve |
| 108 | Drive mechanism |
| 110 | Inlet port |
| 112 | Outlet port |
| 114 | Sleeve |
| 116 | Valve element |
| 118 | Shaft |
| 120 | Insertion hole |
| 124 | Shaft support member |
| 129 | Communicating path |
| 130 | Rotor |
| 132 | Stator |
| 134 | Can |
| 138 | Rotational shaft |
| 140 | Magnet |
| 160 | Body |
| 162 | Recessed groove |
| 201 | Valve body |
| 204 | Body |
| 206 | Butterfly valve |
| 212 | Switching valve |
| 216 | Valve element |
| 218 | Sealing member |
| 224 | Shaft support member |
| 226 | Communicating groove |
| 229 | Communicating path |
| 301 | Valve body |
| 304 | Body |
| 306 | Butterfly valve |
| 308 | Drive mechanism |
| 312 | Switching valve |
| 316 | Valve element |
| 401 | Valve body |
| 408 | Drive mechanism |
| 412 | Switching valve |
| 501 | Valve body |
| 504 | Body |
| 508 | Drive mechanism |
| 512 | Switching valve |
| 601 | Valve body |
| 602 | Motor unit |
| 612 | Switching valve |
| 701 | Valve body |
| 703 | Refrigerant passage |
| 704 | Body |
| 710 | Switching valve |
| 712 | Inlet port |
| 714 | Outlet port |
| 715 | Sleeve |
| 716 | Outlet port |
| 801 | Valve body |
| 804 | Body |

| 810 | Switching valve |
|---|---|
| 812 | Outlet port |
| 814, 816 | Inlet port |
| 901 | Valve body |
| 903 | Refrigerant passage |
| 904 | Body |
| 910 | Switching valve |
| 912 | Inlet port |
| 914 | Inlet/outlet port |
| 915 | Sleeve |
| 916 | Inlet/outlet port |
| 918 | Outlet port |

**Claims**

1. A stepping motor driven switching valve comprising:

a body having a plurality of ports for introducing or delivering refrigerant, and a refrigerant passage through which the ports communicate;
a shaft extending in a radial direction of the refrigerant passage, the shaft being rotatably supported by the body;
a valve element fixed to the shaft, and configured to rotate with the shaft to selectively make the ports communicate with one another;
a drive mechanism configured to drive the valve element in opening and closing directions of the refrigerant passage via the shaft;
a stepping motor including a rotor for actuating the drive mechanism and a stator for rotating the rotor; and
a can that is a cylindrical member fixed to the body, covering a space in which the drive mechanism is disposed, and surrounding the rotor, the can defining a pressure acting space in which the rotor is disposed and pressure of refrigerant acts and a non pressure acting space in which the stator is disposed and pressure of refrigerant does not act,
wherein the valve element is part of a butterfly valve and includes a plate rotatable with the shaft and capable of defining a high-pressure region and a low-pressure region in the refrigerant passage, and
the switching valve further comprising a communicating path connecting the high-pressure region or the low-pressure region and the pressure acting space to permit circulation of refrigerant therethrough.

2. A switching valve according to claim 1, wherein the communicating path has one open end in the low-pressure region of the refrigerant passage and another open end in the pressure acting space inside the can.

3. A switching valve according to claim 2, wherein the shaft extends through an insertion hole formed through a partition between the pressure acting space and the refrigerant passage in the body, a clearance between the insertion hole and the shaft forming the communicating path.

4. A switching valve according to any one of claims 1 to 3, wherein the valve element includes a sealing member provided at least on an outer peripheral portion of the plate, the sealing member coming into close contact with an inner wall surface of the refrigerant passage to prevent leakage of refrigerant in a valve closed state.

5. A switching valve according to any one of claims 1 to 4,
wherein the refrigerant passage includes individual passages formed for the respective ports, the individual passages communicate with one another through a converging region,
wherein the valve element is disposed in the converging region, rotation of the valve element in one direction and rotation thereof in a direction opposite thereto are restricted in such a manner that an outer peripheral portion of the valve element is stopped by an inner wall surface of the refrigerant passage, and the valve element is capable of selectively making two of the ports to communicate with each other in each of rotation-restricted states in which the rotation in either direction is restricted,
wherein a specific region that becomes the low-pressure region whether the valve element is in either of the rotation-restricted states is formed in the refrigerant passage, and
wherein one open end of the communicating path is open in the specific region.

6. A switching valve according to any one of claims 1 to 5,
   wherein a recess extending in parallel with the shaft is formed on one surface of the plate facing the low-pressure region, and
   the shaft is fixed in such a manner as to fit in the recess.

FIG.1

FIG.2

FIG.3A

FIG.3B

FIG.4A

FIG.4B

FIG.4C

FIG.5

FIG.6A

FIG.6B

FIG.7A

FIG.7B

FIG.7C

FIG.7D

FIG.8A

FIG.8B

FIG.9A

FIG.9B

FIG.10

FIG.11

(A)

FIG.12A

(B)

FIG.12B

FIG.13

FIG.14

FIG.15

FIG.16

FIG.17

FIG.18A

FIG.18B

FIG.19

FIG.20A

804
703
129
812
718
722
118

814

724
306
715
316
726

816

FIG.20B

118
804
703
129
812
718
722

814

724
306
715
316
726

816

FIG.21

FIG.22A

FIG.22B

**INTERNATIONAL SEARCH REPORT**

| International application No. |
|---|
| PCT/JP2014/001296 |

A. CLASSIFICATION OF SUBJECT MATTER
*F16K31/04(2006.01)i, F16K11/052(2006.01)i, F25B41/06(2006.01)i*

According to International Patent Classification (IPC) or to both national classification and IPC

B. FIELDS SEARCHED

Minimum documentation searched (classification system followed by classification symbols)
F16K31/04, F16K11/052, F25B41/06

Documentation searched other than minimum documentation to the extent that such documents are included in the fields searched
Jitsuyo Shinan Koho      1922–1996   Jitsuyo Shinan Toroku Koho   1996–2014
Kokai Jitsuyo Shinan Koho   1971–2014   Toroku Jitsuyo Shinan Koho   1994–2014

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2004-44628 A (Saginomiya Seisakusho, Inc.), 12 February 2004 (12.02.2004), paragraphs [0012] to [0018]; fig. 1 to 2 (Family: none) | 1-6 |
| Y | Microfilm of the specification and drawings annexed to the request of Japanese Utility Model Application No. 63479/1989(Laid-open No. 5947/1991) (Jidosha Kiki Co., Ltd.), 21 January 1991 (21.01.1991), specification, page 7, line 3 to page 8, line 17; fig. 1 to 5 (Family: none) | 1-6 |

☒   Further documents are listed in the continuation of Box C.      ☐   See patent family annex.

\*    Special categories of cited documents:
"A"   document defining the general state of the art which is not considered   to be of particular relevance
"E"   earlier application or patent but published on or after the international filing date
"L"   document which may throw doubts on priority claim(s) or which is cited to establish the publication date of another citation or other special reason (as specified)
"O"   document referring to an oral disclosure, use, exhibition or other means
"P"   document published prior to the international filing date but later than the priority date claimed

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search | Date of mailing of the international search report |
|---|---|
| 27 May, 2014 (27.05.14) | 03 June, 2014 (03.06.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

**EP 3 001 078 A1**

**INTERNATIONAL SEARCH REPORT**

International application No.

PCT/JP2014/001296

C (Continuation). DOCUMENTS CONSIDERED TO BE RELEVANT

| Category* | Citation of document, with indication, where appropriate, of the relevant passages | Relevant to claim No. |
|---|---|---|
| Y | Microfilm of the specification and drawings annexed to the request of Japanese Utility Model Application No. 143145/1974(Laid-open No. 69498/1976)<br>(Nittan Denshi Kabushiki Kaisha),<br>01 June 1976 (01.06.1976),<br>specification, page 2, line 5 to page 4, line 3; fig. 3 to 6<br>(Family: none) | 4-5 |
| Y | Microfilm of the specification and drawings annexed to the request of Japanese Utility Model Application No. 24066/1990(Laid-open No. 57571/1991)<br>(Hiroshige Sangyo Kabushiki Kaisha),<br>03 June 1991 (03.06.1991),<br>specification, page 19, line 18 to page 24, line 12; fig. 1 to 2<br>(Family: none) | 4 |
| Y | JP 2000-18396 A (Bosch Braking Systems Co., Ltd.),<br>18 January 2000 (18.01.2000),<br>paragraphs [0027] to [0029]; fig. 1<br>(Family: none) | 6 |
| A | US 2003/0145603 A1 (William H. REED),<br>07 August 2003 (07.08.2003),<br>paragraphs [0010] to [0013]; fig. 1<br>& WO 2003/067056 A1 | 1-6 |

Form PCT/ISA/210 (continuation of second sheet) (July 2009)

40

**EP 3 001 078 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010266062 A

- JP 2012087966 A